# FASCICULE DE BREVET EUROPEEN

(11) **EP 0 452 172 B1**
(45) Date de publication et mention de la délivrance du brevet: **27.04.1994**
(21) Numéro de dépôt: 91400695.2
(22) Date de dépôt: 14.03.1991
(51) Int. Cl.: F16L 37/10

(54) **Dispositif d'assemblage rapide par encliquetage pour échangeurs de chaleur de véhicules automobiles**
Schnellmontageclip für Wärmetauscher an Kraftfahrzeugen
Quick-mounting clip for automobile heat-exchangers

(30) Priorité: 29.03.1990 FR 9004017
(43) Date de publication de la demande: 16.10.1991
(73) Titulaire: HUTCHINSON S.A., F-75008 Paris (FR); VALEO THERMIQUE MOTEUR, 78320 Le Mesnil Saint-Denis (FR)
(72) Inventeur: Potier, Michel, F-78120 Rambouillet (FR); Briet, Gilles, F-71130 Gueugnon (FR)
(74) Mandataire: Ores, Irène

(56) Documents cités:
- FR-A- 2 015 349
- US-A- 4 881 760

## Description

La présente invention est relative à un dispositif d'assemblage rapide par encliquetage destiné plus particulièrement à l'assemblage des échangeurs de chaleur sur les circuits de refroidissement de véhicules automobiles. En pratique, il s'agit d'assembler entre eux chacun des embouts d'entrée et de sortie des boîtes à eau d'un échangeur de chaleur avec un embout correspondant solidarisé à une extrémité d'un tuyau souple d'entrée et de sortie, respectivement, faisant partie des circuits de refroidissement précités.

Dans la plupart des solutions existantes, l'assemblage est obtenu par encliquetage de parties saillantes, telles que des pattes élastiques, qui sont généralement solidaires de l'embout porté par un tuyau souple, du type dit durit réalisé à base d'élastomère. En cas de cassure des parties saillantes d'encliquetage il faut donc remplacer la totalité du tuyau souple, ce qui comporte des inconvénients économiques considérables. Il a par ailleurs été remédié à cet inconvénient en proposant une bague munie d'ergots s'encliquetant dans les deux embouts, voir Fig. 9 de FR-A- 2 015 349, ce qui correspond au préambule de la présente revendication 1.

Avec un tel dispositif d'assemblage, on n'a pas la sécurité absolue que l'assemblage entre les deux embouts ait effectivement eu lieu, ce qui n'est pas admissible dans ce genre d'application.

La présente invention s'est donc donné pour but de pourvoir à un dispositif d'assemblage qui ne présente pas les inconvénients précités et qui répond mieux aux nécessités de la pratique que les dispositifs du même type visant au même but antérieurement connus, notamment en ce qu'il est possible de visualiser de façon sûre la condition dans laquelle l'assemblage est effectivement réalisé.

La présente invention a pour objet un dispositif d'assemblage par encliquetage entre un premier embout de raccordement et un deuxième embout de raccordement, ces deux embouts étant destinés à s'emboîter axialement l'un dans l'autre et à comprimer radialement entre eux un joint annulaire d'étanchéité, le dispositif de raccordement comprenant une bague de verrouillage destinée à être rapportée sur un des deux embouts et comportant au moins deux ergots radiaux destinés à s'encliqueter dans des logements correspondants, ménagés dans les deux embouts lorsqu'ils sont emboîtés l'un dans l'autre, caractérisé en ce que le premier embout de raccordement est un embout d'entrée ou de sortie, d'une boîte à eau d'échangeur de chaleur, en ce que le deuxième embout de raccordement est solidarisé à une extrémité d'un tuyau souple d'un circuit destiné à véhiculer un fluide de refroidissement, en ce que ladite bague comporte en outre entre chaque paire d'ergots consécutifs une portion extensible équipée de moyens de visualisation de l'état déformé de la bague, dans lequel les ergots ne sont pas encliquetés dans les logements correspondants des deux embouts, et de l'état non déformé de la bague, dans lequel les ergots sont encliquetés dans les logements précités, et en ce que le dispositif comporte également des moyens de déverrouillage de la bague par rotation de celle-ci.

Selon un mode de réalisation préféré du dispositif conforme à l'invention, les moyens de visualisation de l'état déformé/non déformé de la bague de verrouillage, et donc de l'état non encliqueté/encliqueté de ses ergots, sont constitués par une pluralité de segments axiaux flexibles séparés par une pluralité de fentes axiales borgnes à une extrémité et ménagées de part et d'autre par rapport au plan médian radial de la bague, donnant ainsi à chaque portion extensible de la bague une configuration en zigzag.

Selon un autre mode de réalisation avantageux du dispositif conforme à l'invention, l'embout de raccordement destiné à recevoir la bague de verrouillage comporte des évidements de positionnement transitoire de ses ergots, et donc de la bague, en une position d'attente en vue du verrouillage, de manière à permettre d'emboîter les deux embouts de raccordement et d'aligner radialement les logements de verrouillage ménagés dans ces embouts avant de faire passer les ergots en position de verrouillage par encliquetage dans les logements ainsi radialement alignés, la bague étant stabilisée dans sa position d'attente par une collerette radiale de l'embout correspondant qui est ménagée à l'extrémité proximale de cet embout et sur laquelle est destinée à prendre appui la bague dans ladite position d'attente, les évidements de positionnement transitoire étant ménagés de façon à être juxtaposés du côté proximal aux logements de verrouillage correspondants des ergots.

Selon une disposition préférée de ce mode de réalisation, la collerette radiale comporte, dans l'axe des logements de verrouillage et des évidements de positionnement transitoire des ergots, des encoches de passage de ces ergots permettant de ne pas déformer trop la bague lors de son montage sur l'embout correspondant.

Selon une autre disposition avantageuse de ce mode de réalisation, l'extrémité distale de l'embout destiné à s'emboîter avec l'embout destiné à recevoir la bague de verrouillage en position d'attente comporte des doigts saillant radialement et orientés axialement, destinés à pousser la bague dans sa position de verrouillage, ces doigts poussoirs faisant aussi moyens d'indexage du positionnement de l'embout portant le tuyau souple par rapport à la boîte à eau et étant destinés à s'emboîter axialement dans les encoches de passage des ergots.

Selon une variante avantageuse de ce mode de réalisation, l'embout destiné à s'emboîter avec l'embout destiné à recevoir la bague de verrouillage présente une surface d'emboîtement conique qui provoque l'écartement des ergots lors de l'emboîtement entre les embouts lorsque la bague est encliquetée sur l'embout destiné à la recevoir avant emboîtement des embouts.

Selon une disposition avantageuse de cette variante, le dispositif d'assemblage comporte des moyens d'indexage du positionnement de l'embout portant le tuyau souple par rapport à la boîte à eau qui sont également dans ce cas conformes aux doigts et aux encoches précédents.

Selon une modalité de réalisation avantageuse de ces dispositions, les doigts précités sont réalisés sous forme de V, de même que les encoches de passage des ergots destinées à coopérer avec ces doigts.

Selon un mode de réalisation préféré du dispositif selon l'invention, les moyens de déverrouillage de la bague par rotation de celle-ci sont constitués par deux surfaces chanfreinées des ergots de verrouillage qui sont ménagées sur deux côtés de chaque ergot disposés dans le sens de la circonférence de la bague et qui sont destinées à coopérer avec deux surfaces chanfreinées complémentaires au moins des logements de verrouillage de l'embout destiné à recevoir la bague.

Conformément à l'invention, les logements de verrouillage de l'embout destiné à s'emboîter avec l'embout destiné à recevoir la bague de verrouillage communiquent entre eux et définissent ensemble une gorge annulaire unique.

Outre les dispositions qui précèdent, l'invention comprend encore d'autres dispositions, qui ressortiront de la description qui va suivre.

L'invention sera mieux comprise à l'aide du complément de description qui va suivre, qui se réfère aux dessins annexés, dans lesquels :
- la figure 1 est une vue en coupe d'une boîte à eau destinée à être fixée à une extrémité d'un échangeur de chaleur d'un véhicule automobile et comportant un premier embout de raccordement réalisé en une seule pièce avec la boîte ;
- la figure 2 représente une vue de dessus d'un deuxième embout de raccordement destiné, d'une part, à recevoir un tuyau souple appartenant au circuit hydraulique de refroidissement du véhicule automobile et, d'autre part, à s'emboîter avec l'embout de la boîte à eau ;
- la figure 3 est une vue en coupe suivant III de la figure 2 ;
- la figure 4 est une vue en coupe suivant IV de la figure 3 ;
- la figure 5 est une vue en coupe de la bague d'assemblage selon l'invention ;
- la figure 6 est une vue de dessous de la boîte à eau et du tuyau souple avec les deux embouts assemblés entre eux à l'aide de la bague de la figure 5;
- la figure 7 est une vue en coupe suivant VII de la figure 6 ;
- la figure 8 est une vue en coupe suivant VIII de la figure 7 ;
- la figure 9 est une vue de dessus de la boîte à eau et du tuyau souple avec les embouts correspondants emboîtés l'un dans l'autre mais qui ne sont pas assemblés entre eux à l'aide de la bague de la figure 5 ;
- la figure 10 est une variante de réalisation du dispositif d'assemblage rapide conforme à l'invention.

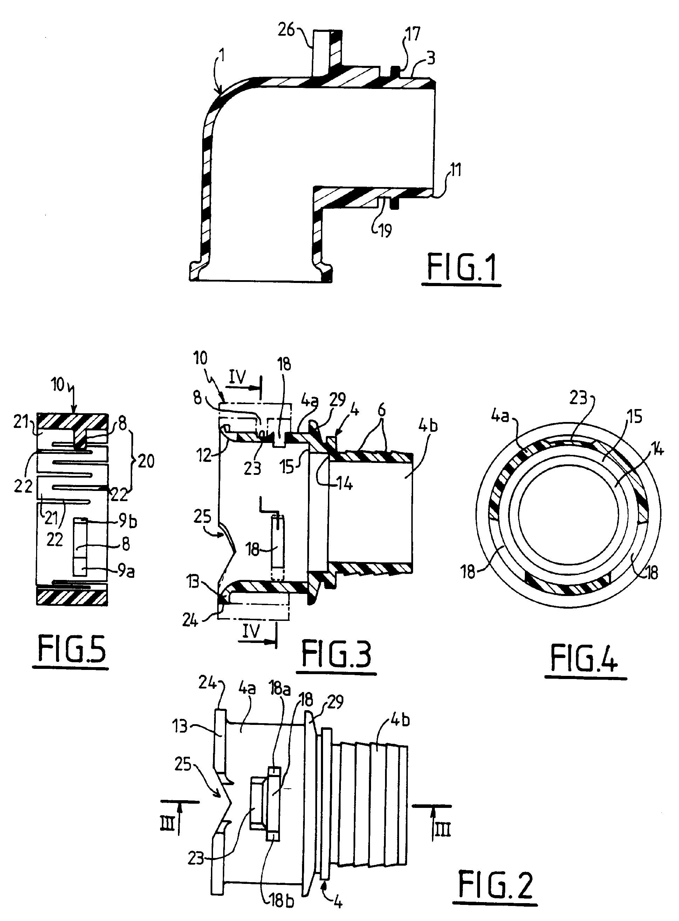

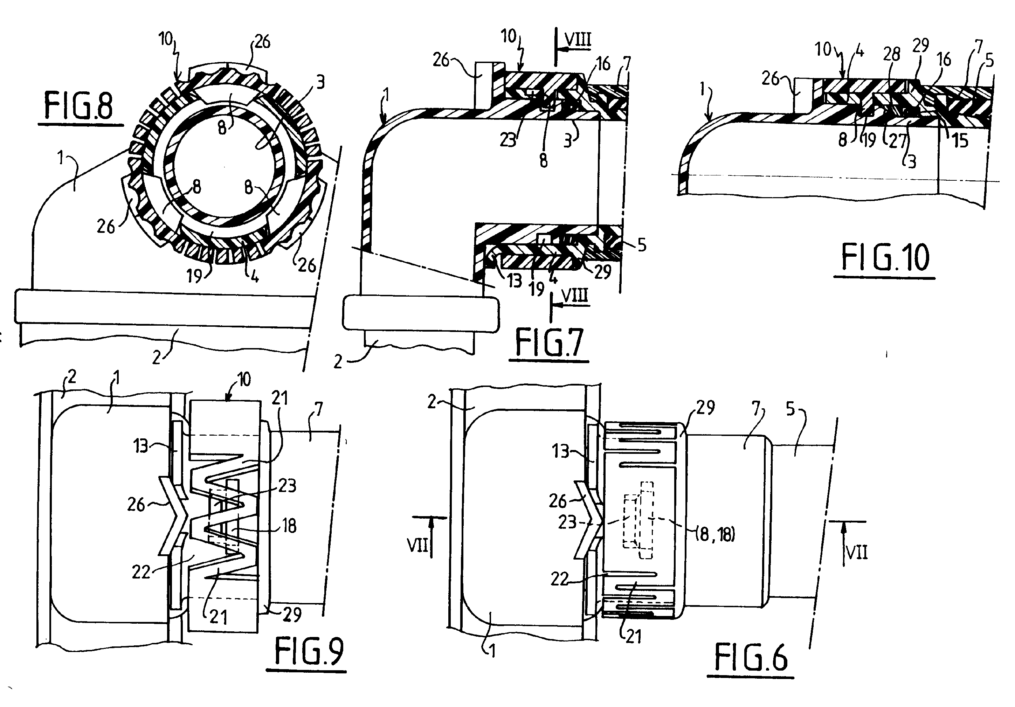

La figure 1 illustre en coupe une des deux boîtes à eau 1 destinée à être montée aux extrémités d'un faisceau de tubes à ailettes d'un échangeur de chaleur, tel que celui désigné sous la référence 2 aux figures 6 à 9. Cette boîte à eau 1 comporte un embout de raccordement 3 destiné à s'emboîter axialement avec un et 3 et destiné à être appliqué à l'extrémité proximale d'un tuyau souple 5, du type dit durit à base d'elastomère, comme illustré aux figures 6 et 7 en particulier.

L'embout 4 comporte deux portions, dont une portion proximale 4a est destinée à recevoir la bague de verrouillage 10 conforme à l'invention, qui sera décrite ci-après, et d'une portion distale 4b destinée à recevoir l'extrémité proximale du tuyau souple 5.

La portion distale 4b de l'embout 4 est pourvue de crans 6 destinés à améliorer la liaison entre le tuyau et l'embout. Un manchon 7 (cf en particulier les figures 6 et 7) entoure l'extrémité proximale du tuyau souple 5, rendant ainsi la solidarisation de ce tuyau à l'embout très fiable du point de vue de la résistance et de l'étanchéité.

L'extrémité proximale 11 de l'embout de raccordement 3 de la boîte à eau 1 est chanfreinée, alors que l'extrémité proximale 12 de l'embout de raccordement 4 du tuyau souple 5 est évasée, donnant ainsi lieu à une collerette 13, ce qui permet de faciliter l'emboîtement entre les deux embouts. On peut remarquer également à la figure 3, dans la surface interne de l'embout 4, un premier épaulement annulaire rentrant 14, contre lequel vient en butée l'extrémité proximale 11 de l'embout 3 de la boîte à eau, et un deuxième épaulement annulaire 15 contre lequel est destiné à venir en butée un joint d'étanchéité, tel que celui désigné par la référence 16 aux figures 7 et 10. Ce joint 16 est comprimé radialement entre les deux embouts 3 et 4 lorsqu'ils sont emboîtés l'un dans l'autre, alors qu'axialement il est compris entre l'épaulement 15 précité de l'embout 4 et un épaulement annulaire saillant 17 de l'embout 3 (cf la figure 1).

A la figure 5 est représentée, en coupe axiale, la bague 10 de verrouillage conforme à l'invention permettant de verrouiller par encliquetage les deux embouts 3 et 4 lorsqu'ils sont emboîtés l'un dans l'autre.

A cet effet, la bague comporte une pluralité d'ergots de verrouillage radiaux 8 (trois dans l'exemple illustré : cf en particulier la figure 8) qui font saillie à partir de la surface interne de la bague vers l'axe de celle-ci. On peut remarquer que les surfaces 9a et 9b disposées selon la circonférence de ces ergots 8 sont chanfreinées pour les raisons qui seront expliquées par la suite.

La bague 10 est destinée à être rapportée sur l'extrémité proximale 4a de l'embout 4 de manière que ses ergots 8 puissent s'encliqueter dans des logements 18 ménagés dans la portion proximale 4a de l'embout 4 et espacés de 120°, comme les ergots de la bague. L'embout 3 de la boîte à eau comporte une gorge annulaire 19 destinée à recevoir par encliquetage les ergots 8 lorsqu'ils traversent les logements 18 de l'embout 4 emboîté avec l'embout 3, mais cet embout peut aussi comporter des logements correspondant, en position et en dimension, aux logements 18.

On peut remarquer (cf en particulier la figure 2) que les surfaces 18a, 18b délimitant le logement de verrouillage 18 dans le sens de la circonférence sont chanfreinées de manière à coopérer avec les surfaces chanfreinées 9a et 9b des ergots 8 d'une manière qui sera précisée par la suite.

La portion de bague 20 comprise entre deux ergots consécutifs 8 est extensible et comporte des moyens de visualisation, d'une part, de l'état déformé de la bague 10, état dans lequel les ergots 8 ne sont pas encliquetés dans les logements correspondants 18 et 19 lorsqu'ils sont radialement alignés suite à l'emboîtement entre les embouts 3 et 4 et, d'autre part, de visualisation de l'état non déformé de la bague, dans lequel les ergots sont encliquetés dans les logements 18 et 19 radialement alignés entre eux. Ces moyens de visualisation de l'état déformé/non déformé de la bague de verrouillage 10, et donc de l'état non encliqueté/encliqueté de ses ergots 8, sont constitués par une pluralité de segments axiaux 21 séparés par une pluralité de fentes axiales 22 borgnes à une extrémité et ménagées de part et d'autre par rapport au plan médian radial, donnant ainsi à chaque portion extensible 20 de la bague une configuration en zigzag.

La portion proximale 4a de l'embout 4, destinée à recevoir la bague de verrouillage 10, comporte des évidements 23 de positionnement transitoire de ses ergots 8, et donc de la bague, en une position d'attente en vue du verrouillage, de manière à permettre d'emboîter l'embout 4 sur l'embout 3 et d'aligner radialement les logements de verrouillage 18 et 19 précités avant de faire passer les ergots 8 en position de verrouillage par encliquetage dans ces logements 18 et 19 ainsi radialement alignés.

Les évidements de positionnement transitoire 23 sont ménagés de façon à être juxtaposés du côté proximal aux logements de verrouillage 18 de l'embout 4. La configuration de ces évidements 23 ainsi que des logements 18 peut être appréciée également dans les deux demi-coupes de la figure 4.

La stabilisation de la bague dans sa position d'attente est obtenue par la collerette 13 de l'extrémité proximale évasée de l'embout 4 qui offre à la surface interne de la bague 10 une surface d'appui radiale 24.

Afin de ne pas avoir à trop déformer la bague de verrouillage 10 lors de son montage sur l'embout 4, à cause de la présence de la collerette de stabilisation 13, celle-ci comporte des encoches 25 ménagées dans l'axe des logements de verrouillage 18 et des évidements de positionnement transitoire 23, ces encoches 25 permettant le passage des ergots 8 avec une légère déformation de la bague 10. L'extrémité distale de l'embout 3 de la boîte à eau comporte des doigts 26 destinés à pousser la bague 10 de la position d'attente, illustrée en traits mixtes à la figure 3, à sa position de verrouillage illustrée aux figures 6 à 8. Ces doigts poussoirs 26 constituent également des moyens d'indexage efficaces du positionnement de l'embout 4 portant le tuyau souple 5 dans le circuit de refroidissement duquel il fait partie, tel qu'il doit être monté sur un véhicule automobile par rapport à la boîte à eau. A cet effet, les doigts poussoirs d'indexage 26 sont réalisés sous la forme de parties en V saillant radialement et orientées axialement; la paroi circonférentielle de la portion proximale 4a de l'embout 4 présente, à l'endroit des encoches 25, des évidements axiaux 25' de formes complémentaires aux doigts 26, ici conformés également en V pour coopérer avec ces doigts 26. Il est donc facile de comprendre que, lorsque la bague est dans la position d'attente illustrée à la figure 3 en traits mixtes, bien que les deux embouts 3 et 4 soient emboîtés l'un dans l'autre, ils ne sont pas encore verrouillés, cet état de non verrouillage étant immédiatement visualisé par l'écartement des segments flexibles 21 de chaque portion extensible de la bague 10 (cf la figure 9). Au contraire, lorsque les ergots 8 de cette bague sont encliquetés dans les logements 18 et 19 des embouts 3 et 4, suite à la poussée exercée sur cette bague par les doigts poussoirs 26, cet état d'encliquetage et donc de verrouillage est visualisé immédiatement par le rapprochement des segments 21 de la bague 10.

La position d'attente de la bague 10, outre à permettre la visualisation de l'état du verrouillage, permet de réduire l'effort de montage de l'embout 4 sur l'embout 3 de la boîte à eau, cet effort étant limité à la seule compression du joint d'étanchéité 16. En ce qui concerne le désassemblage entre les deux embouts 3 et 4, celui-ci est obtenu très facilement en désencliquetant les ergots 8 de la gorge 19 et des logements 18 précités par rotation de la bague 10, cette rotation étant rendue possible par les surfaces chanfreinées 9a, 9b et 18a, 18b des ergots 8 et des logements 18. Il va de soi que ce désencliquetage porte les ergots sur la surface extérieure de la portion proximale 4a de l'embout 4, écartant ainsi en V les segments axiaux 21 de chacune des portions extensibles 20 de la bague 10, cet écartement visualisant, une fois de plus, le fait que les deux embouts ne sont pas verrouillés entre eux. Bien sûr, pour séparer axialement les deux embouts, et ce avec un minimum d'effort, il suffit de tourner légèrement l'embout 4 du tuyau souple 5 de manière à le dégager des doigts poussoirs 26, cette rotation étant rendue possible grâce à la conformation en V de ces doigts et des encoches 25 de passage des ergots 8.

La figure 10 montre une variante de réalisation qui diffère par rapport au mode de réalisation illustré aux figures précédentes en ce que l'embout 3 de la boîte à eau 1 comporte une surface d'emboîtement avec l'embout 4 du tuyau souple qui est une surface conique 27, cette disposition permet de monter la bague 10 déjà en position de verrouillage sur l'extrémité proximale 4a de l'embout 4, c'est-à-dire avec les ergots 8 déjà encliquetés dans les logements 18 en sorte que, lors de l'emboîtement de l'embout 4 sur l'embout 3, les ergots 8 dépassant radialement les logements 18 viennent en butée sur la surface conique 27, ce qui provoque leur écartement et par conséquent celui des segments flexibles 21 de la bague 10, qui se rapprochent entre eux à nouveau dès que les ergots 8 s'encliquettent dans la gorge 19 de l'embout 3. Egalement dans ce cas, jusqu'à ce que l'emboîtement entre les embouts 3 et 4 n'est pas complet, l'écartement entre les segments flexibles 21 de la bague 10 révèle que l'encliquetage n'a pas encore eu lieu, alors que le rapprochement de ces segments révèle que l'encliquetage a eu lieu.

A la figure 10 on a représenté le joint d'étanchéité 16 comme étant emprisonné entre l'épaulement 15 de l'embout 4 et une bague rapportée 28, de section triangulaire pour s'adapter à la surface conique 27 de l'embout 3. Cette bague 28 permet non seulement de positionner le joint d'étanchéité 16 mais aussi de la protéger. Bien entendu, l'emploi d'une bague de positionnement et de protection du joint d'étanchéité peut être aussi envisagé dans le mode de réalisation précédent, bien qu'une telle bague n'ait pas été représentée.

En outre, il y a lieu de signaler que les deux embouts 3 et 4 peuvent être verrouillés entre eux par simple rotation de la bague 10, à condition de monter celle-ci avec les trois ergots 8 disposés dans le plan des logements 18 de l'embout 4. En pratique cet alignement entre les ergots 8 de la bague et les logements 18 de l'embout 4 peut être obtenu facilement en encliquetant les ergots dans les logements 18, après les avoir fait passer par les encoches 25, et en déverrouillant la bague 10 par rotation de celle-ci avant d'emboîter entre eux les deux embouts 3 et 4, ce qui provoque le glissement des surfaces chanfreinées 9a et 9b des ergots 8 sur les surfaces chanfreinées 18a et 18b des logements 18 et l'extraction des ergots de ces logements, ces ergots venant ainsi se positionner sur la surface de l'embout 4 directement dans le plan des logements 18 ( cf figure 9 ).

Bien que dans le cas où la bague 10 est montée sur l'embout 4, avec les ergots 8 déjà encliquetés dans les logements 18 ou dans le plan de ces logements, on n'a pas besoin des doigts poussoirs 26, on maintient également dans ces cas ces doigts, qui sont alors utilisés comme doigts d'indexage, à savoir de positionnement correct du tuyau souple 5 par rapport à la boîte à eau 1.

En outre, il y a lieu de remarquer la présence d'une deuxième collerette radiale 29 qui, bien que n'étant pas indispensable, est toutefois utile pour délimiter l'emplacement de la bague de verrouillage sur l'embout 4 conjointement avec la collerette radiale 13.

D'après la description qui précède, il est donc clair que la bague selon l'invention, coopérant avec les embouts à assembler, satisfait parfaitement au but visé par la présente invention. En fait, en tant que pièce rapportée, la cassure accidentelle ou l'usure des ergots d'encliquetage ou encore la cassure accidentelle de la bague dans son ensemble ne nécessitent pas le remplacement du tuyau souple ou de la boîte à eau, dans ce cas étant suffisant uniquement de remplacer la bague ; en outre, le caractère extensible de cette bague, qui lui est conféré par les segments axiaux flexibles séparés par des fentes axiales, fournit un témoin efficace et fiable du bon encliquetage de la bague de verrouillage, tout en permettant aussi son déverrouillage rapide selon les modalités déjà évoquées plus haut.

Ainsi que cela ressort de ce qui précède, l'invention ne se limite nullement à ceux de ses modes de mise en oeuvre, de réalisation et d'application qui viennent d'être décrits de façon plus explicite. En particulier, il doit être entendu que la boîte à eau avec son embout ainsi que l'embout du tuyau souple, la bague de verrouillage et la bague de positionnement du joint d'étanchéité sont de préférence réalisés en matière plastique, alors que le joint d'étanchéité est en élastomère.

## Revendications

1. Dispositif d'assemblage par encliquetage entre un premier embout de raccordement (3) et un deuxième embout de raccordement (4), ces deux embouts (3, 4) étant destinés à s'emboîter axialement l'un dans l'autre et à comprimer radialement entre eux un joint annulaire d'étanchéité (16), le dispositif de raccordement comprenant une bague de verrouillage (10) destinée à être rapportée sur un des deux embouts (4) et comportant au moins deux ergots radiaux (8) destinés à s'encliqueter dans des logements correspondants (18, 19) , ménagés dans les deux embouts (3, 4) lorsqu'ils sont emboités l'un dans l'autre, caractérisé en ce que le premier embout de raccordement (3) est un embout d'entrée ou de sortie, d'une boîte à eau (1) d'échangeur de chaleur (2), en ce que le deuxième embout de raccordement (4) est solidarisé à une extrémité d'un tuyau souple (5) d'un circuit destiné à véhiculer un fluide de refroidissement, en ce que ladite bague (10) comporte en outre entre chaque paire d'ergots consécutifs (8) une portion extensible (20) équipée de moyens de visualisation (21, 22) de l'état déformé de la bague (10), dans lequel les ergots (8) ne sont pas encliquetés dans les logements correspondants (18, 19) des deux embouts (4, 3), et de l'état non déformé de la bague, dans lequel les ergots (8) sont encliquetés dans les logements précités (18, 19), et en ce que le dispositif comporte également des moyens de déverrouillage (9a-9b, 18a-18b) de la bague (10) par rotation de celle-ci.

2. Dispositif selon la revendication 1, caractérisé en ce que les moyens de visualisation de l'état déformé/non déformé de la bague de verrouillage (10), et donc de l'état non encliqueté/encliqueté de ses ergots (8), sont constitués par une pluralité de segments axiaux flexibles (21) séparés par une pluralité de fentes axiales (22) borgnes à une extrémité et ménagées de part et d'autre par rapport au plan médian radial de la bague (10), donnant ainsi à chaque portion extensible (20) de la bague (10) une configuration en zigzag.

3. Dispositif selon la revendication 2, caractérisé en ce que l'embout de raccordement (4) destiné à recevoir la bague de verrouillage (10) comporte des évidements de positionnement transitoire (23) de ses ergots (8), et donc de la bague (10), en une position d'attente en vue du verrouillage, de manière à permettre d'emboîter les deux embouts de raccordement (3, 4) et d'aligner radialement les logements de verrouillage (18, 19) ménagés dans ces embouts (4, 3) avant de faire passer les ergots (8) en position de verrouillage par encliquetage dans les logements ainsi radialement alignés (18,19), la bague (10) étant stabilisée dans sa position d'attente par une collerette radiale (13) de l'embout correspondant (4) qui est ménagée à l'extrémité proximale (12) de cet embout (4) et sur laquelle est destinée à prendre appui la bague (10) dans ladite position d'attente, les évidements de positionnement transitoire (23) étant ménagés de façon à être juxtaposés du côté proximal aux logements de verrouillage correspondants (18) des ergots (8).

4. Dispositif selon la revendication 3, caractérisé en ce que la collerette radiale (13) comporte, dans l'axe des logements de verrouillage (18) et des évidements de positionnement transitoire (23) des ergots (8), des encoches (25) de passage de ces ergots (8) permettant de ne pas déformer trop la bague (10) lors de son montage sur l'embout correspondant (4).

5. Dispositif selon la revendication 4, caractérisé en ce que l'extrêmité distale de l'embout (3) destiné à s'emboîter avec l'embout destiné à recevoir la bague de verrouillage (10) en position d'attente comporte des doigts (26) saillant radialement et orientés axialement, destinés à pousser la bague (10) dans sa position de verrouillage, ces doigts poussoirs (26) faisant aussi moyens d'indexage du positionnement de l'embout portant le tuyau souple (5) par rapport à la boîte à eau (1) et étant destinés à s'emboîter axialement dans les évidements (25').

6. Dispositif selon l'une quelconque des revendications 2 à 5, caractérisé en ce que l'embout (3) destiné à s'emboîter avec l'embout (4) destiné à recevoir la bague de verrouillage (10) présente une surface d'emboîtement conique (27) qui provoque l'écartement des ergots (8) lors de l'emboîtement entre les embouts (3, 4) lorsque la bague (10) est encliquetée sur l'embout (4) destiné à la recevoir avant emboîtement des embouts (3, 4).

7. Dispositif selon la revendication 6, caractérisé en ce que le dispositif d'assemblage comporte des moyens d'indexage (25', 26) du positionnement de l'embout portant le tuyau souple (5) par rapport à la boîte à eau (1) conformes aux doigts et aux encoches de la revendication 5.

8. Dispositif selon l'une quelconque des revendications 5 ou 7, caractérisé en ce que les doigts précités (26) sont réalisés sous forme de V, de même que les évidements (25') destinés à coopérer avec ces doigts (26).

9. Dispositif selon la revendication 1, caractérisé en ce que les moyens de déverrouillage de la bague (10) par rotation de celle-ci sont constitués par deux surfaces chanfreinées (9a, 9b) des ergots de verrouillage (8) qui sont ménagées sur deux côtés de chaque ergot disposés dans le sens de la circonférence de la bague (10) et qui sont destinées à coopérer avec deux surfaces chanfreinées complémentaires (18a, 18b) au moins des logements de verrouillage (18) de l'embout (4) destiné à recevoir la bague (10).

10. Dispositif selon la revendication 9, caractérisé en ce que les logements de verrouillage de l'embout (3) destiné à s'emboîter avec l'embout destiné à recevoir la bague de verrouillage (10) communiquent entre eux et définissent ensemble une gorge annulaire unique (19).

## Patentansprüche

1. Vorrichtung zum Zusammenbau durch Verklinkung zwischen einem ersten Verbindungs-Ansatzstück (3) und einem zweiten Verbindungs-Ansatzstück (4), wobei die beiden Ansatzstücke (3, 4) dazu bestimmt sind, axial ineinanderzusitzen und radial zwischeneinander einen Dichtungsring (16) zusammenzudrücken, wobei die Verbindungsvorrichtung einen Verriegelungsring (10) aufweist, der dazu bestimmt ist, mit einem der beiden Ansatzstücke (4) verbunden zu sein und der mindestens zwei radiale Vorsprünge (8) aufweist, die dazu bestimmt sind, in entsprechende Aussparungen (18, 19) einzurasten, die in den beiden Ansatzstücken (3, 4) ausgespart sind, während sie ineinandersitzen, dadurch **gekennzeichnet**, daß das erste Verbindungs-Ansatzstück (3) ein Einlaß- oder Auslaß-Ansatzstück für einen Wasserkasten (1) für einen Wärmetauscher (2) ist, daß das zweite Verbindungs-Ansatzstück (4) mit dem Ende eines Schlauches (5) eines Kreislaufes fest verbunden ist, der dazu bestimmt ist, ein Kühl-Strömungsmittel zu fördern, daß der genannte Ring (10) außerdem zwischen jedem Paar aufeinanderfolgender Vorsprünge (8) einen aufweitbaren Abschnitt (20) aufweist, der mit einer Einrichtung zur Sichtbarmachung (21, 22) für den verformten Zustand des Ringes (10) ausgestattet ist, in dem die Vorsprünge (8) nicht in die entsprechenden Aufnahmen (18, 19) der beiden Ansatzstücke (4, 3) eingerastet sind, sowie den nicht-verformten Zustand des Ringes, in welchem die Vorsprünge (8) in die oben genannten Aussparungen (18, 19) eingerastet sind, und daß die Vorrichtung in gleicher Weise Mittel zum Entriegeln (9a-9b, 18a-18b) des Ringes (10) durch dessen Drehung aufweist.

2. Vorrichtung nach Anspruch 1, dadurch **gekennzeichnet**, daß die Mittel zur Sichtbarmachung des verformten/nicht-verformten Zustandes des Verriegelungsringes (10) und demnach des nicht-eingerasteten/eingerasteten Zustandes seiner Vorsprünge (8) von einer Anzahl axialer, flexibler Segmente (21) gebildet sind, die durch eine Anzahl axialer Schlitze (22) getrennt sind, die am einen Ende blind und beiderseits bezüglich einer radialen Mittelebene des Ringes (10) eingebracht sind, so daß sie somit jedem aufweitbaren Abschnitt (20) des Ringes (10) eine zickzackförmige Ausbildung verleihen.

3. Vorrichtung nach Anspruch 2, dadurch **gekennzeichnet**, daß das Verbindungs-Ansatzstück (4), das dazu bestimmt ist, den Verriegelungsring (10) aufzunehmen, Aussparungen (23) zur vorübergehenden Positionierung seiner Vorsprünge (8) und somit des Ringes (10) in einer Bereitschaftsposition hinsichtlich der Verriegelung auf eine solche Weise aufweist, daß es ermöglicht ist, die beiden Verbindungs-Ansatzstücke (3, 4) ineinanderzuschachteln und die Verriegelungsaufnahmen (18, 19), die in diese Ansatzstücke (4, 3) eingebracht sind, radial auszurichten, bevor man die Vorsprünge (8) in der Verriegelungslage durch Einrasten in die somit radial ausgerichteten Aufnahmen (18, 19) eintreten läßt, wobei der Ring (10) in seiner Bereitschaftslage durch einen radialen Rand (13) des entsprechenden Ansatzstückes (4) gehalten ist, der in das nächstgelegene Ende (12) dieses Ansatzstückes (4) eingebracht ist und auf dem bestimmungsgemäß der Ring (10) in der genannten Bereitschaftslage aufsitzt, und wobei die Aussparungen (23) zur vorübergehenden Positionierung auf eine solche Weise eingebracht sind, daß sie auf der den entsprechenden Verriegelungsaufnahmen (18) für die Vorsprünge (8) nächstgelegenen Seite danebenliegend angeordnet sind.

4. Vorrichtung nach Anspruch 3, dadurch **gekennzeichnet**, daß der radiale Rand (13) in der Achse der Verriegelungsaufnahmen (18) und der Aussparungen (23) für die vorübergehende Positionierung der Vorsprünge (8) Kerben (25) für den Durchgang dieser Vorsprünge (8) aufweist, die es gestatten, den Ring (10) während seiner Anbringung auf dem entsprechenden Ansatzstück (4) nicht übermäßig zu verformen.

5. Vorrichtung nach Anspruch 4, dadurch **gekennzeichnet**, daß das abgelegene Ende des Ansatzstückes (3), das dazu bestimmt ist, mit dem Ansatzstück verschachtelt zu werden, das zur Aufnahme des Verriegelungsringes (10) in der Bereitschaftslage bestimmt ist, Finger (26) aufweist, die radial überstehen und axial ausgerichtet sind, die dazu bestimmt sind, den Ring (10) in seine Verriegelungslage zu schieben, wobei diese Schiebefinger (26) auch Anzeigemittel für die Positionierung des Ansatzstückes, das den Schlauch (5) trägt, in Bezug auf den Wasserkasten (1) bilden und dazu bestimmt sind, sich axial in die Aussparungen (25') einzuschachteln.

6. Vorrichtung nach einem der Ansprüche 2 bis 5, dadurch **gekennzeichnet**, daß das Ansatzstück (3), das dazu bestimmt ist, sich mit dem Ansatzstück (4) zu verschachteln, welches dazu bestimmt ist, den Verriegelungsring (10) aufzunehmen, eine konische Verschachtelungsfläche (27) aufweist, die das Abspreizen der Vorsprünge (8) während des Verschachtelns zwischen den Ansatzstücken (3, 4) hervorruft, während der Ring (10) auf dem Ansatzstück (4) aufgerastet ist, das dazu bestimmt ist, ihn vor dem Verschachteln der Ansatzstücke (3, 4) aufzunehmen.

7. Vorrichtung nach Anspruch 6, dadurch **gekennzeichnet**, daß die Vorrichtung zum Zusammenbau Anzeigemittel (25', 26) für die Positionierung des Ansatzstückes, das den Schlauch (5) trägt, in Bezug auf den Wasserkasten (1) aufweist, die mit den Fingern und Kerben des Anspruchs 5 übereinstimmen.

8. Vorrichtung nach einem der Ansprüche 5 oder 7, dadurch **gekennzeichnet**, daß die oben genannten Finger (26) V-förmig ausgebildet sind, wie auch die Aussparungen (25'), die dazu bestimmt sind, mit diesen Fingern (26) zusammenzuwirken.

9. Vorrichtung nach Anspruch 1, dadurch **gekennzeichnet**, daß die Entriegelungsmittel des Ringes (10) durch dessen Drehung von zwei abgefasten Flächen (9a, 9b) der Verriegelungsvorsprünge (8) gebildet sind, die auf den beiden Seiten eines jeden Vorsprungs ausgebildet sind, die in Umfangsrichtung des Ringes (10) angeordnet sind, und die dazu bestimmt sind, mit zwei abgeschrägten komplementären Flächen (18a, 18b) mindestens der Verriegelungsaufnahmen (18) jedes Ansatzstückes (4) zusammenzuwirken, das zur Aufnahme des Rings (10) bestimmt ist.

10. Vorrichtung nach Anspruch 9, dadurch **gekennzeichnet**, daß die Verriegelungsaufnahmen des Ansatzstückes (3), das dazu bestimmt ist, mit dem Ansatzstück verschachtelt zu werden, das zur Aufnahme des Verriegelungsrings (10) bestimmt ist, untereinander in Verbindung stehen und gemeinsam eine einzige Ringkehle (19) bilden.

## Claims

1. A device for making a snap-fitting assembly between a first connecting socket (3) and a second connecting socket (4), said two sockets (3, 4) being intended to be fitted axially one into the other and to compress radially between them an angular sealing gasket (16), the connecting device comprising a locking ring (10) intended to be connected to one of the two sockets (4) and comprising at least two radial studs (8) intended for snap-fitting engagement in corresponding seatings (18, 19) provided in the two sockets (3, 4) when they are fitted one into the other, characterised in that the first connecting socket (3) is an inlet or outlet socket of a water tank (1) of a heat exchanger (2) and in that the second connecting socket (4) is rigid with one end of a flexible pipe (5) of a circuit intended to carry a cooling fluid, and in that the said ring (10) furthermore comprises between each pair of consecutive studs (8) an extensible portion (20) provided with means (21, 22) for visualising the deformed condition of the ring (10), in which the studs (8) are not engaged in the corresponding seatings (18, 19) in the two sockets (4, 3) and the non-deformed state of the ring, in which the studs (8) are engaged in the aforesaid seatings (18, 19) and in that the device likewise comprises means (9a-9b, 18a-18b) for releasing the ring (10) by rotation of this latter.

2. A device according to claim 1, characterised in that the means of visualising the deformed/non-deformed condition of the locking ring (10) and therefore of the non-engaged/engaged condition of its studs (8), are constituted by a plurality of flexible axial segments (21) separated by a plurality of axial slots (22) which are blind at one end and which are disposed on either side in relation to the median radial plane through the ring (10), so imparting a zig-zag configuration to each extensible portion (20) of the ring (10).

3. A device according to claim 2, characterised in that the connecting socket (4) intended to receive the locking ring (10) comprises recesses for the temporary positioning (23) of its studs (8) and therefore of the ring (10) in a waiting position pending locking, to allow the two connecting sockets (3, 4) to be fitted into each other and for radially aligning the locking seatings (18, 19) provided in these sockets (4, 3) before moving the studs (8) into a locking position by snap-fitment in the thus radially aligned seatings (18, 19), the ring (10) being stabilised in its waiting position by a radial collar (13) on the corresponding socket (4) which is disposed at the proximal end (12) of this socket (4) and on which the ring (10) is intended to bear when in the waiting position, the temporary positioning recesses (23) being disposed in such a way as to be juxtaposed on the proximal side with the corresponding locking seatings (18) of the studs (8).

4. A device according to claim 3, characterised in that the radial collar (13) comprises in the axis of the locking seatings (18) and temporary positioning recesses (23) for the studs (8), notches (25) for passage of these studs (8) so that the ring (10) does not become excessively deformed when it is fitted on the corresponding socket (4).

5. A device according to claim 4, characterised in that the distal end of the socket (3) which is intended to fit together with the socket intended to receive the locking ring (10) in the waiting position comprises fingers (26) which project radially and are axially orientated, intended to push the ring (10) into its locking position, these pusher fingers (26) also serving as means of indexing the position of the socket carrying the flexible pipe (5) in relation to the water tank (1) and being intended to fit axially into the recesses (25')

6. A device according to any one of claims 2 to 5, characterised in that the socket (3) intended to fit together with the socket (4) intended to receive the locking ring (10) has a conical fitting surface (27) which causes the studs (8) to move apart upon fitment between the sockets (3, 4) when the ring (10) is snap-fitted onto the socket (4) intended to receive it prior to fitment together of the sockets (3, 4).

7. A device according to claim 6, characterised in that the assembly device comprises means (25', 26)for indexing the position of the socket carrying the flexible pipe (5) in relation to the water tank (1) in accordance with the fingers and notches in claim 5.

8. A device according to any one of claims 5 or 7, characterised in that the aforesaid fingers (26) are constructed in the form of a V, like the recesses (25') intended to co-operate with these fingers (26).

9. A device according to claim 1, characterised in that the means of releasing the ring (10) by rotation of this latter consist of two chamfered surfaces (9a, 9b) on the locking studs (8) which are disposed on both sides of each stud disposed in the circumferential direction of the ring (10) and which are intended to co-operate with two complementary chamfered surfaces (18a, 18b) at least on the locking seatings (18) of the socket (4) intended to receive the ring (10).

10. A device according to claim 9, characterised in that the locking seatings of the socket (3) intended to fit together with the socket intended to receive the locking ring (10) communicate inter se and jointly define a single annular groove (19).
